# EUROPÄISCHE PATENTANMELDUNG

(11) **EP 3 253 019 A1**
(43) Veröffentlichungstag der Anmeldung: **06.12.2017**
(21) Anmeldenummer: 16172692.2
(22) Anmeldetag: 02.06.2016
(51) Int. Cl.: H04L 29/06

(54) **VORRICHTUNGEN UND VERFAHREN ZUM KOMMUNIZIEREN ÜBER EIN KOMMUNIKATIONSNETZWERK**

(71) Anmelder: Deutsche Telekom AG, 53113 Bonn (DE)
(72) Erfinder: Stepanek, Nicolas Walter, 64385 Reichelsheim (DE); Spanknebel, Frank R., 64521 Groß-Gerau (DE)
(74) Vertreter: Patentship Patentanwaltsgesellschaft mbH

(57) **Zusammenfassung**

Die Erfindung betrifft ein Kommunikationsendgerät (101 a) für eine Kommunikation mit einem weiteren Kommunikationsendgerät (101b) über ein Kommunikationsnetzwerk (120). Das Kommunikationsendgerät (101a) umfasst eine Benutzerschnittstelle (109a) zum Auswählen eines ersten Kommunikationsmodus oder eines zweiten Kommunikationsmodus des Kommunikationsendgeräts (101a) und eine Kommunikationsschnittstelle (107a), welche ausgebildet ist, in dem ersten Kommunikationsmodus des Kommunikationsendgeräts (101a) eine Telefonieverbindung mit dem weiteren Kommunikationsendgerät (101b) über das Kommunikationsnetzwerk (120) aufzubauen und in dem zweiten Kommunikationsmodus über das Kommunikationsnetzwerk (120) eine Audio- oder Videonachricht an das weitere Kommunikationsendgerät (101b) zu übertragen. Ferner betrifft die Erfindung ein entsprechendes Verfahren.

## Beschreibung

Die Erfindung betrifft Vorrichtungen und Verfahren zum Kommunizieren über ein Kommunikationsnetzwerk, insbesondere über ein Kommunikationsnetzwerk zur Sprach- oder Videokommunikation.

Moderne Kommunikationsendgeräte, insbesondere Mobiltelefone in Form von Smartphones, bieten die Möglichkeit, Informationen in unterschiedlichen Formen zwischen einem ersten Teilnehmer, dem Absender, und einem zweiten Teilnehmer, dem Empfänger, über ein Kommunikationsnetzwerk zu übertragen, wie beispielsweise Telefongespräche, Textnachrichten, Bildnachrichten, Videonachrichten und dergleichen. Um beispielsweise ein Telefongespräch mit einem anderen Teilnehmer zu führen, gibt der Anrufer an seinem Telefon, welchem eine erste Telefonnummer zugeordnet ist, beispielsweise in Verbindung mit einem Telefonanschluss im Fall eines Festnetztelefons, das auf der PSTN- oder der VoIP-Technologie basiert, oder in Verbindung mit einem Zugangspunkt in Form einer SIM-Karte oder einer eSIM im Fall eines Mobiltelefons, die Telefonnummer des Teilnehmers ein, mit dem der Anrufer das Telefongespräch führen möchte. Üblicherweise ist jedem Teilnehmer eines Kommunikationsnetzwerkes ein eindeutiges Adressierungsdatum, beispielsweise eine Telefonnummer, eine E-Mail-Adresse oder ein Benutzername, zugeordnet, über welches dieser Teilnehmer im Kommunikationsnetzwerk erreichbar ist.

Falls der angerufene Teilnehmer bereits ein anderes Telefongespräch führt, d.h. der Anschluss bzw. Zugangspunkt des angerufenen Teilnehmers "besetzt" ist, besteht die Möglichkeit, dass der Anrufer eine Sprachnachricht auf einer Sprachbox des angerufenen Teilnehmers hinterlegt, die der angerufene Teilnehmer zu einem späteren Zeitpunkt abrufen kann. Gemäß dem Stand der Technik ist die Möglichkeit, einem angerufenen Teilnehmer eine derartige Sprachnachricht zukommen zu lassen, also nur dann gegeben, wenn sich der Kommunikationsanschluss des angerufenen Teilnehmers in einem bestimmten Zustand befindet. Ferner besteht beispielsweise im Festnetz die Möglichkeit, dass ein angerufener Teilnehmer über das vermittlungstechnische Leistungsmerkmal "Anrufweiterschaltung sofort" eingehende Anrufe automatisch auf dessen Festnetz-Sprachbox umleiten lässt. In beiden Fällen hängt also die Möglichkeit des Anrufers, dem angerufenen Teilnehmer eine Sprachnachricht zu übermitteln, vom Zustand und/oder den Einstellungen des Anschlusses des angerufenen Teilnehmers ab.

Vor diesem Hintergrund besteht die Aufgabe der Erfindung darin, verbesserte Vorrichtungen und Verfahren bereitzustellen, die es einem ersten Teilnehmer eines Kommunikationsnetzwerks ermöglichen, einem zweiten Teilnehmer eine Sprachnachricht zu übermitteln.

Diese Aufgabe wird durch die Gegenstände der unabhängigen Ansprüche gelöst. Vorteilhafte Weiterbildungsformen sind Gegenstand der abhängigen Ansprüche.

Gemäß einem ersten Aspekt betrifft die Erfindung ein Kommunikationsendgerät für eine Kommunikation mit einem weiteren Kommunikationsendgerät über ein Kommunikationsnetzwerk. Das Kommunikationsendgerät umfasst eine Benutzerschnittstelle zum Bereitstellen einer Audio- oder Videonachricht auf dem Kommunikationsendgerät und zum Auswählen eines ersten Kommunikationsmodus oder eines zweiten Kommunikationsmodus des Kommunikationsendgeräts sowie eine Kommunikationsschnittstelle, welche ausgebildet ist, in dem ersten Kommunikationsmodus des Kommunikationsendgeräts eine Telefonieverbindung (auch als Wahlverbindung bezeichnet) mit dem weiteren Kommunikationsendgerät über das Kommunikationsnetzwerk aufzubauen und in dem zweiten Kommunikationsmodus über das Kommunikationsnetzwerk die Audio- oder Videonachricht an das weitere Kommunikationsendgerät zu übertragen.

In einer Ausführungsform umfasst das Kommunikationsendgerät ferner einen Speicher zum Bereitstellen der Audio- oder Videonachricht.

In einer Ausführungsform umfasst die Benutzerschnittstelle des Kommunikationsendgeräts ferner ein Mikrofon und/oder eine Kamera zum Erfassen der Audio- oder Videonachricht.

In einer Ausführungsform umfasst das Kommunikationsendgerät ferner einen Prozessor, welcher ausgebildet ist, in Reaktion auf eine Interaktion eines Benutzers über die Benutzerschnittstelle des Kommunikationsendgeräts vom ersten Kommunikationsmodus in den zweiten Kommunikationsmodus zu wechseln.

In einer Ausführungsform ist der Prozessor ausgebildet, in Reaktion auf eine Interaktion des Benutzers über die Benutzerschnittstelle des Kommunikationsendgeräts ein Steuersignal zu erzeugen und über die Kommunikationsschnittstelle an eine Netzwerkentität des Kommunikationsnetzwerks zu senden, wobei das Steuersignal der Netzwerkentität anzeigt, dass eine Audio- oder Videonachricht an das weitere Kommunikationsendgerät übertragen werden soll.

In einer Ausführungsform kann es sich bei dem Kommunikationsendgerät um ein Mobiltelefon, ein Festnetztelefon oder um ein auf VolP-Technologie basierendes Telefon handeln.

Gemäß einem zweiten Aspekt betrifft die Erfindung ein entsprechendes Verfahren zum Kommunizieren über ein Kommunikationsnetzwerk. Das Verfahren umfasst das Bereitstellen einer Audio- oder Videonachricht auf einem Kommunikationsendgerät, das in einem ersten Kommunikationsmodus oder einem zweiten Kommunikationsmodus betrieben werden kann, wobei in dem ersten Kommunikationsmodus das Kommunikationsendgerät eine Telefonieverbindung mit einem weiteren Kommunikationsendgerät über das Kommunikationsnetzwerk aufbauen kann und in dem zweiten Kommunikationsmodus über das Kommunikationsnetzwerk die Audio- oder Videonachricht an das weitere Kommunikationsendgerät übertragen kann.

In einer Ausführungsform umfasst in dem zweiten Kommunikationsmodus das Übertragen der Audio- oder Videonachricht über das Kommunikationsnetzwerk an das weitere Kommunikationsendgerät einen Schritt des Übertragens der Audio- oder Videonachricht von dem Kommunikationsendgerät an eine Netzwerkentität des Kommunikationsnetzwerkes, einen Schritt des Hinterlegens der Audio- oder Videonachricht im Kommunikationsnetzwerk durch die Netzwerkentität und einen Schritt des Übertragens der Audio- oder Videonachricht von der Netzwerkentität an das weitere Kommunikationsendgerät.

In einer Ausführungsform umfasst der Schritt des Übertragens der Audio- oder Videonachricht von der Netzwerkentität an das weitere Kommunikationsendgerät einen Schritt des Benachrichtigens des weiteren Kommunikationsendgeräts durch die Netzwerkentität und einen Schritt des Abrufens der Audio- oder Videonachricht durch das weitere Kommunikationsendgerät.

In einer Ausführungsform umfasst das Verfahren nach dem Übertragen der Audio- oder Videonachricht ferner einen Schritt des Übertragens einer Empfangsbestätigung von dem weiteren Kommunikationsendgerät an die Netzwerkentität und/oder das Kommunikationsendgerät.

In einer Ausführungsform wechselt das Kommunikationsendgerät in Reaktion auf eine Interaktion eines Benutzers über eine Benutzerschnittstelle des Kommunikationsendgeräts vom ersten Kommunikationsmodus in den zweiten Kommunikationsmodus.

In einer Ausführungsform umfasst das Verfahren ferner einen Schritt des Aufbauens der Telefonieverbindung zwischen dem Kommunikationsendgerät und dem weiteren Kommunikationsendgerät auf der Grundlage einer Telefonnummer oder eines anderen eindeutigen Adressierungsdatums des weiteren Kommunikationsendgeräts.

In einer Ausführungsform umfasst das Verfahren nach dem Schritt des Aufbauens der Telefonieverbindung zwischen dem Kommunikationsendgerät und dem weiteren Kommunikationsendgerät und vor dem Schritt des Übertragens der Audio- oder Videonachricht von dem Kommunikationsendgerät an die Netzwerkentität des Kommunikationsnetzwerkes einen weiteren Schritt des Übertragens eines Steuersignals an die Netzwerkentität, wobei das Steuersignal der Netzwerkentität anzeigt, dass eine Audio- oder Videonachricht an das weitere Kommunikationsendgerät übertragen werden soll.

Gemäß einem dritten Aspekt betrifft die Erfindung eine Netzwerkentität eines Kommunikationsnetzwerkes, wobei die Netzwerkentität ausgebildet ist, gemeinsam mit einem Kommunikationsendgerät und einem weiteren Kommunikationsendgerät gemäß dem ersten Aspekt der Erfindung das Verfahren gemäß dem zweiten Aspekt der Erfindung auszuführen.

In einer Ausführungsform ist die Netzwerkentität als Applikationsserver ausgebildet.

Weitere Ausführungsbeispiele werden Bezug nehmend auf die beiliegenden Zeichnungen erläutert. Es zeigen:
- Fig. 1: eine schematische Darstellung eines Kommunikationssystems, in dem erfindungsgemäße Vorrichtungen und Verfahren implementiert sind;
- Fig. 2: eine schematische Darstellung des Ablaufs der Kommunikation bei einem Verfahren zum Kommunizieren in dem Kommunikationssystems von Figur 1 gemäß einer Ausführungsform; und
- Fig. 3: eine schematische Darstellung des Ablaufs der Kommunikation bei einem Verfahren zum Kommunizieren in dem Kommunikationssystems von Figur 1 gemäß einer weiteren Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

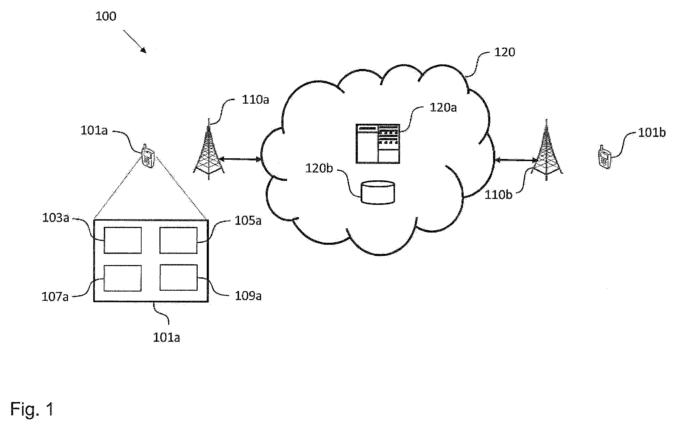

Figur 1 zeigt eine schematische Darstellung eines Kommunikationssystems 100, in dem verschiedene Aspekte der Erfindung verwirklicht sind. Das Kommunikationssystem 100 umfasst ein erstes telefoniefähiges Kommunikationsendgerät 110a und ein zweites telefoniefähiges Kommunikationsendgerät 110b. Bei dem ersten telefoniefähigen Kommunikationsendgerät 110a und/oder dem zweiten telefoniefähigen Kommunikationsendgerät 110b kann es sich beispielsweise um, wie in Figur 1 angedeutet, ein Mobiltelefon, insbesondere Smartphone, ein Festnetztelefon oder ein anderes auf PSTN- und/oder VoIP-Technologie basierendes telefoniefähiges Kommunikationsendgerät handeln.

Das erste Kommunikationsendgerät 101a und das zweite Kommunikationsendgerät 101b sind dazu ausgebildet, dass der Benutzer des ersten telefoniefähigen Kommunikationsendgerät 101a (nachstehend auch als Teilnehmer A bezeichnet) über ein Kommunikationsnetzwerk 120, insbesondere ein Telefonnetzwerk 120 mit dem Benutzer des zweiten telefoniefähigen Kommunikationsendgerät 101 b (nachstehend auch als Teilnehmer B bezeichnet) ein Telefongespräch führen kann. Das erste Kommunikationsendgerät 101a und das zweite Kommunikationsendgerät 101b sind somit telefoniefähig.

Wie sich der schematischen Detailansicht des Kommunikationsendgeräts 101a in Figur 1 entnehmen lässt, kann gemäß der in Figur 1 dargestellten Ausführungsform das Kommunikationsendgerät 101a hierzu einen Prozessor 103a, einen elektronischen Speicher 105a, eine Kommunikationsschnittstelle 107a, beispielsweise in Form einer Antenne, und eine Benutzerschnittstelle 109a zur Interaktion des Benutzers mit dem Kommunikationsendgerät 101a aufweisen. Die Benutzerschnittstelle 109a kann beispielsweise ein physikalisches oder virtuelles Tastenfeld zur Eingabe oder Auswahl einer Telefonnummer und/oder ein Mikrofon und einen Lautsprecher zur Aufnahme und Wiedergabe von Sprache umfassen. Das Kommunikationsendgerät 101b kann die gleichen oder vergleichbare Komponenten wie das Kommunikationsendgerät 101a aufweisen.

Für den Fall, dass das erste Kommunikationsendgerät 101a und das zweite Kommunikationsendgerät 101b als Mobiltelefone ausgebildet sind, können diese über entsprechende Basisstationen 110a, 110b und das Kommunikationsnetzwerk 120 kommunizieren. Bei dem Kommunikationsnetzwerk 120 kann es sich um ein "klassisches" Festnetz (PSTN), ein Mobilfunknetz, ein auf VoIP basierendes Kommunikationsnetzwerk, ein Next Generation Network (NGN) und/oder ein IP Multimedia Subsystem (IMS) Netz handeln, also um eine Kommunikationsnetzwerk, das die Funktion eines Telefonnetzwerkes einschließt. In Ausführungsformen der Erfindung stellt das Kommunikationsnetzwerk 120 die physikalische Infrastruktur bereit, auf der ein Messaging-Dienst eines OTT-Anbieters implementiert ist.

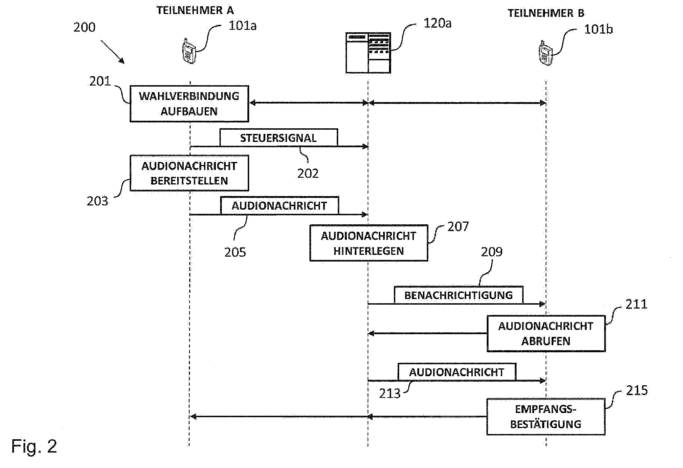

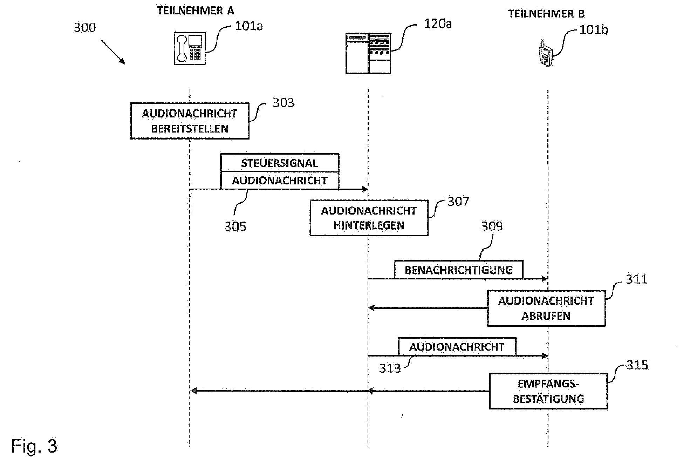

Wie nachstehend unter weiterer Bezugnahme auf die Figuren 2 und 3 im Detail beschrieben wird, erlaubt es die Benutzerschnittstelle 109a des Kommunikationsendgeräts 101a eine Audio- oder Videonachricht bereitzustellen, beispielsweise indem die Audio- oder Videonachricht über ein Mikrofon und/oder eine Kamera der Benutzerschnittstelle 109a direkt erfasst wird oder die Audio- oder Videonachricht aus dem Speicher 105a des Kommunikationsendgeräts 101a abgerufen wird, und einen ersten Kommunikationsmodus oder einen zweiten Kommunikationsmodus des Kommunikationsendgeräts 101 a auszuwählen. Dabei ist die Kommunikationsschnittstelle 107a des Kommunikationsendgeräts 101a dazu ausgebildet, in dem ersten Kommunikationsmodus des Kommunikationsendgeräts eine Telefonieverbindung (auch als Wahlverbindung bezeichnet) mit dem weiteren Kommunikationsendgerät 101b über das Kommunikationsnetzwerk 120 aufzubauen, beispielsweise um ein Telefongespräch zu führen, und in dem zweiten Kommunikationsmodus über das Kommunikationsnetzwerk 120 die Audio- oder Videonachricht an das weitere Kommunikationsendgerät 101 b zu übertragen.

Bei der in Figur 1 dargestellten Ausführungsform umfasst das Kommunikationsnetzwerk 120 eine Netzwerkentität 120a in Form eines Applikationsservers 120a, der mit einem Fileserver 120b kommunizieren kann. In Ausführungsformen, bei denen das Kommunikationsnetzwerk 120 beispielsweise als PSTN ausgestaltet ist, kann das Kommunikationsnetzwerk 120 eine Netzwerkentität 120a in Form einer Vermittlungsstelle umfassen. Die Funktion und Ausgestaltung der Netzwerkentität 120a wird nachstehend unter weiterer Bezugnahme auf die Figuren 2 und 3 beschrieben.

Die Figuren 2 und 3 zeigen jeweils eine schematische Darstellung des Ablaufs der Kommunikation bei einem Verfahren zum Kommunizieren in dem in Figur 1 dargestellten Kommunikationssystem 100 gemäß einer jeweiligen Ausführungsform.

Bei der in Figur 2 dargestellten Ausführungsform befindet sich das Kommunikationsendgerät 101a zunächst in dem ersten Kommunikationsmodus, d.h. in einem Schritt 201 wird eine Telefonieverbindung bzw. Wahlverbindung zwischen dem Kommunikationsendgerät 101a, d.h. dem Teilnehmer A, und dem Kommunikationsendgerät 101b, d.h. dem Teilnehmer B, aufgebaut. Zum Aufbauen dieser Wahlverbindung kann der Teilnehmer A über die Benutzerschnittstelle 109a des Kommunikationsendgeräts 101a, die beispielsweise eine Tastatur umfassen kann, die Rufnummer des Teilnehmers B eingeben. Alternativ kann der Teilnehmer A über die Benutzerschnittstelle 109a die Rufnummer des Teilnehmers B aus dem Speicher 105a des Kommunikationsendgeräts 101a abrufen.

Gemäß einer Ausführungsform ist vorgesehen, dass der Teilnehmer A zu jeder Phase des Aufbaus der Telefonieverbindung mit dem Teilnehmer B in den zweiten Kommunikationsmodus des Kommunikationsendgeräts 101a wechseln kann. Merkt der Teilnehmer A beispielsweise aufgrund eines lang anhaltenden Freizeichens, dass der Teilnehmer B den Anruf nicht annehmen kann, so kann der Teilnehmer A mittels einer entsprechenden Interaktion über die Benutzerschnittelle 109a des Kommunikationsendgeräts 101a, beispielsweise indem der Teilnehmer A einen entsprechenden Sprachbefehl, beispielsweise "Sprachnachricht hinterlassen" erteilt, der Teilnehmer A eine bestimmte Tastenfolge oder eine Nachwahlziffer über die Benutzerschnittstelle 109a eingibt und/oder eine Funktionstaste in einer Applikation auf dem Kommunikationsendgerät 101a betätigt, einen Wechsel in den zweiten Kommunikationsmodus veranlassen, um anstatt ein Telefonat mit dem Teilnehmer B zu führen, dem Teilnehmer B eine Audio- oder Videonachricht zukommen zu lassen.

Wird ein solcher Wechsel vom ersten Kommunikationsmodus in den zweiten Kommunikationsmodus vom Teilnehmer A über die Benutzerschnittstelle 109a des Kommunikationsendgeräts 101a veranlasst, erzeugt der Prozessor 103a des Kommunikationsendgeräts 101a ein Steuersignal und überträgt dieses Steuersignal in einem Schritt 202 über die Kommunikationsschnittstelle 107a an die Netzwerkentität 120a. Dabei ist das Steuersignal so ausgestaltet, dass der Netzwerkentität 120a angezeigt wird, dass der Teilnehmer A eine Audio- oder Videonachricht an das weitere Kommunikationsendgerät 101b übertragen möchte, mit dem im ersten Kommunikationsmodus (Schritt 201) eine Wahlverbindung aufgebaut worden ist. In einem Schritt 203 erstellt der Teilnehmer A die zu versendende Audio- oder Videonachricht, beispielsweise indem die Audio- oder Videonachricht von einem Mikrofon und/oder einer Kamera des Kommunikationsendgeräts 101a aufgezeichnet wird, oder stellt die Audio- oder Videonachricht auf eine andere Art und Weise bereit, beispielsweise indem eine im Speicher 105a des Kommunikationsendgeräts 101a hinterlegte Audio- oder Videonachricht zum Versenden an den Teilnehmer B ausgewählt wird. Anschließend überträgt das Kommunikationsendgerät 101a in einem Schritt 205 die Audio- oder Videonachricht an die Netzwerkentität 120a des Kommunikationsnetzwerks 120.

In einem Schritt 207 hinterlegt die Netzwerkentität 120a die Audio- oder Videonachricht in einem vom Teilnehmer B abrufbaren Netzwerkspeicher, beispielsweise auf der Netzwerkentität 120a selbst und/oder dem Fileserver 120b.

In einem Schritt 209 wird der Teilnehmer B von der Netzwerkentität 120a darüber informiert, dass eine Audio- oder Videonachricht für ihn vorliegt. In einer Ausführungsform kann diese Benachrichtigung auch die Telefonnummer des Teilnehmers A oder ein anderes Identifizierungsdatum des Teilnehmers A umfassen. In Ausführungsformen kann dem Teilnehmer B das Vorliegen der Audio- oder Videonachricht durch einen entsprechenden Signalton des Kommunikationsendgeräts 101 b angezeigt werden.

Sobald der Teilnehmer B die Benachrichtigung in Schritt 209 erhalten hat, kann er die Audio- oder Videonachricht in einem Schritt 211 abrufen, so dass die Audio- oder Videonachricht in einem Schritt 213 auf das Kommunikationsendgerät 101b des Teilnehmers B heruntergeladen wird und dort wiedergegeben werden kann. Anschließend oder gleichzeitig kann in einem Schritt 215 eine Empfangsbestätigung der Audio- oder Videonachricht an die Netzwerkentität 120a und/oder das Kommunikationsendgerät 101a des Teilnehmers A gesendet werden.

Bei der in Figur 3 dargestellten weiteren Ausführungsform ist der Ausgangspunkt der Wunsch des Benutzers des Kommunikationsendgeräts 101a, bei dem es sich in diesem Beispiel um ein Festnetztelefon 101a handelt, von vornherein dem Benutzer des Kommunikationsendgeräts 101b eine Audio- oder Videonachricht zukommen zu lassen, und zwar ohne, wie bei der Ausführungsform von Figur 2, zunächst eine Wahlverbindung 201 mit dem Kommunikationsendgerät 101b aufzubauen.

Diesem Wunsch kann der Teilnehmer A mittels einer entsprechenden Interaktion mit der Benutzerschnittstelle 109a seines Kommunikationsendgeräts 101a Ausdruck geben, beispielsweise indem der Teilnehmer A eine oder mehrere Tasten einer als Teil der Benutzerschnittstelle 109a ausgebildeten Tastatur betätigt. Hierbei kann der Teilnehmer A auch die Telefonnummer des Teilnehmers B eingeben oder auswählen, an den die Audio- oder Videonachricht gesendet werden soll.

In einem Schritt 303 erstellt der Teilnehmer A die zu versendende Audio- oder Videonachricht, beispielsweise indem die Audio- oder Videonachricht von einem Mikrofon und/oder einer Kamera des Kommunikationsendgeräts 101 a aufgezeichnet wird, oder stellt die Audionachricht auf eine andere Art und Weise bereit, beispielsweise indem eine im Speicher 105a des Kommunikationsendgeräts 101 a hinterlegte Audio- oder Videonachricht zum Versenden an den Teilnehmer B ausgewählt wird.

In einem Schritt 305 übermittelt das Kommunikationsendgerät 101a die Audio- oder Videonachricht zusammen mit einem Steuersignal an die Netzwerkentität 120a des Kommunikationsnetzwerks 120. Anhand des Steuersignals erkennt die Netzwerkentität 120a, dass der Teilnehmer A die Audio- oder Videonachricht an den durch seine Telefonnummer bestimmten Teilnehmer B übertragen möchte. Dabei kann die Telefonnummer des Teilnehmers B Teil des Steuersignals sein.

In einem Schritt 307 hinterlegt die Netzwerkentität 120a die Audio- oder Videonachricht in einem vom Teilnehmer B abrufbaren Netzwerkspeicher, beispielsweise auf der Netzwerkentität 120a selbst und/oder dem Fileserver 120b.

In einem Schritt 309 wird der Teilnehmer B von der Netzwerkentität 120a darüber informiert, dass eine Audio- oder Videonachricht für ihn vorliegt. In einer Ausführungsform kann diese Benachrichtigung auch die Telefonnummer des Teilnehmers A oder ein anderes Identifizierungsdatum des Teilnehmers A umfassen.

Sobald der Teilnehmer B die Benachrichtigung in Schritt 309 erhalten hat, kann er die Audio- oder Videonachricht in einem Schritt 311 abrufen, so dass die Audio- oder Videonachricht in einem Schritt 313 auf das Kommunikationsendgerät 101b des Teilnehmers B heruntergeladen wird und dort wiedergegeben werden kann. Anschließend oder gleichzeitig kann in einem Schritt 315 eine Empfangsbestätigung der Audio- oder Videonachricht an die Netzwerkentität 120a und/oder das Kommunikationsendgerät 101a des Teilnehmers A gesendet werden.

Wie der Fachmann erkennen wird, können die vorstehend beschriebenen Vorrichtungen und Verfahren gemäß Ausführungsformen der Erfindung im Wesentlichen nahtlos in bestehende Kommunikationsnetze, insbesondere Telefonnetze eingebunden werden. Gemäß Ausführungsformen der Erfindung wird bei der wahlvermittelten Sprachkommunikation dem Anrufer nach dem Anruf die Wahlfreiheit gegeben, die ursprünglich vom angerufenen Teilnehmer B gewählte Erreichbarkeit zu variieren. Dabei kann die Audio- oder Videonachricht asynchron vom Teilnehmer B abgerufen werden. Es handelt sich somit um eine Art von nachgelagerter Zustellung. Bei Ausführungsformen der Erfindung muss der Teilnehmer A nicht die Gesamtdauer für den Verbindungsaufbau abwarten, sondern kann bereits zu einer frühen Phase des Verbindungsaufbaus, die Entscheidung treffen, dass er anstatt ein Telefongespräch mit dem Teilnehmer B zu führen, diesem eine Audio- oder Videonachricht zukommen lassen möchte.

## Patentansprüche

1. Kommunikationsendgerät (101 a) für eine Kommunikation mit einem weiteren Kommunikationsendgerät (101b) über ein Kommunikationsnetzwerk (120), wobei das Kommunikationsendgerät (101a) umfasst:
eine Benutzerschnittstelle (109a) zum Auswählen eines ersten Kommunikationsmodus oder eines zweiten Kommunikationsmodus des Kommunikationsendgeräts (101 a);
eine Kommunikationsschnittstelle (107a), welche ausgebildet ist, in dem ersten Kommunikationsmodus des Kommunikationsendgeräts (101 a) eine Telefonieverbindung mit dem weiteren Kommunikationsendgerät (101b) über das Kommunikationsnetzwerk (120) aufzubauen und in dem zweiten Kommunikationsmodus über das Kommunikationsnetzwerk (120) eine Audio- oder Videonachricht an das weitere Kommunikationsendgerät (101b) zu übertragen.

2. Kommunikationsendgerät (101a) nach Anspruch 1, wobei das Kommunikationsendgerät (101a) ferner einen Speicher (105a) zum Bereitstellen der Audio- oder Videonachricht umfasst.

3. Kommunikationsendgerät (101a) nach Anspruch 1 oder 2, wobei die Benutzerschnittstelle (109a) des Kommunikationsendgeräts (101 a) ferner ein Mikrofon und/oder eine Kamera zum Erfassen der Audio- oder Videonachricht umfasst.

4. Kommunikationsendgerät (101a) nach einem der vorhergehenden Ansprüche, wobei das Kommunikationsendgerät (101 a) ferner einen Prozessor (103a) umfasst, welcher ausgebildet ist, in Reaktion auf eine Interaktion eines Benutzers über die Benutzerschnittstelle (109a) des Kommunikationsendgeräts (101a) vom ersten Kommunikationsmodus in den zweiten Kommunikationsmodus zu wechseln.

5. Kommunikationsendgerät (101a) nach Anspruch 4, wobei der Prozessor (103a) ausgebildet ist, in Reaktion auf eine Interaktion des Benutzers über die Benutzerschnittstelle (109a) des Kommunikationsendgeräts (101a) ein Steuersignal zu erzeugen und über die Kommunikationsschnittstelle (107a) an eine Netzwerkentität (120a) des Kommunikationsnetzwerks (120) zu senden, wobei das Steuersignal der Netzwerkentität (120a) anzeigt, dass eine Audio- oder Videonachricht an das weitere Kommunikationsendgerät (101b) übertragen werden soll.

6. Kommunikationsendgerät (101a) nach einem der vorhergehenden Ansprüche, wobei es sich bei dem Kommunikationsendgerät (101a) um ein Mobiltelefon, ein Festnetztelefon oder um ein auf VoIP-Technologie basierendes Telefon handelt.

7. Verfahren (200; 300) zum Kommunizieren über ein Kommunikationsnetzwerk (120), wobei das Verfahren (200; 300) umfasst:
Bereitstellen (203; 303) einer Audio- oder Videonachricht auf einem Kommunikationsendgerät (101a), das in einem ersten Kommunikationsmodus oder einem zweiten Kommunikationsmodus betrieben werden kann, wobei in dem ersten Kommunikationsmodus das Kommunikationsendgerät (101a) eine Telefonieverbindung mit einem weiteren Kommunikationsendgerät (101b) über das Kommunikationsnetzwerk (120) aufbauen kann und in dem zweiten Kommunikationsmodus über das Kommunikationsnetzwerk (120) die Audio- oder Videonachricht an das weitere Kommunikationsendgerät (101b) übertragen kann.

8. Verfahren (200; 300) nach Anspruch 7, wobei in dem zweiten Kommunikationsmodus das Übertragen der Audio- oder Videonachricht über das Kommunikationsnetzwerk (120) an das weitere Kommunikationsendgerät (101b) einen Schritt (202; 305) des Übertragens der Audio- oder Videonachricht von dem Kommunikationsendgerät (101a) an eine Netzwerkentität (120a) des Kommunikationsnetzwerkes (120), einen Schritt (207; 307) des Hinterlegens der Audio- oder Videonachricht im Kommunikationsnetzwerk (120) durch die Netzwerkentität (120a) und einen Schritt (209, 211; 309, 311) des Übertragens der Audio- oder Videonachricht von der Netzwerkentität (120a) an das weitere Kommunikationsendgerät (101b) umfasst.

9. Verfahren (200; 300) nach Anspruch 8, wobei der Schritt (209, 211; 309, 311) des Übertragens der Audio- oder Videonachricht von der Netzwerkentität (120a) an das weitere Kommunikationsendgerät (101b) einen Schritt (209; 309) des Benachrichtigens des weiteren Kommunikationsendgeräts (101b) durch die Netzwerkentität (120a) und einen Schritt (211; 311) des Abrufens der Audio- oder Videonachricht durch das weitere Kommunikationsendgerät (101 b) umfasst.

10. Verfahren (200; 300) nach einem der Ansprüche 7 bis 9, wobei das Verfahren (200; 300) nach dem Übertragen (211; 311) der Audio- oder Videonachricht ferner einen Schritt des Übertragens (215; 315) einer Empfangsbestätigung von dem weiteren Kommunikationsendgerät (101b) an die Netzwerkentität (120a) und/oder das Kommunikationsendgerät (101a) umfasst.

11. Verfahren (200; 300) nach einem der Ansprüche 7 bis 10, wobei das Kommunikationsendgerät (101a) in Reaktion auf eine Interaktion eines Benutzers über eine Benutzerschnittstelle (109a) des Kommunikationsendgeräts (101a) vom ersten Kommunikationsmodus in den zweiten Kommunikationsmodus wechselt.

12. Verfahren (200) nach Anspruch 11, wobei das Verfahren (200) ferner einen Schritt des Aufbauens (201) einer Telefonieverbindung zwischen dem Kommunikationsendgerät (101a) und dem weiteren Kommunikationsendgerät (101b) auf der Grundlage einer Telefonnummer oder eines anderen eindeutigen Adressierungsdatums des weiteren Kommunikationsendgeräts (101 b) umfasst.

13. Verfahren (200) nach Anspruch 12, wobei das Verfahren (200) nach dem Schritt des Aufbauens (201) einer Telefonieverbindung zwischen dem Kommunikationsendgerät (101a) und dem weiteren Kommunikationsendgerät (101b) und vor dem Schritt des Übertragens (205) der Audio- oder Videonachricht von dem Kommunikationsendgerät (101a) an die Netzwerkentität (120a) des Kommunikationsnetzwerkes (120) einen weiteren Schritt (202) des Übertragens eines Steuersignals an die Netzwerkentität (120a) umfasst, wobei das Steuersignal der Netzwerkentität (120a) anzeigt, dass eine Audio- oder Videonachricht an das weitere Kommunikationsendgerät (101b) übertragen werden soll.

14. Netzwerkentität (120a) eines Kommunikationsnetzwerkes (120), wobei die Netzwerkentität (120a) ausgebildet ist, gemeinsam mit einem Kommunikationsendgerät (101a) und einem weiteren Kommunikationsendgerät (101a) das Verfahren gemäß einem der Ansprüche 7 bis 13 auszuführen.

15. Netzwerkentität (120a) nach Anspruch 14, wobei die Netzwerkentität (120a) als Applikationsserver ausgebildet ist.
